Europäisches Patentamt

European Patent Office — (11) Publication number: **0 334 542**

Office européen des brevets — **A2**

(12) **EUROPEAN PATENT APPLICATION**

(21) Application number: 89302544.5

(51) Int. Cl.4: **H02G 15/04**

(22) Date of filing: **15.03.89**

(30) Priority: **25.03.88 GB 8807222**

(43) Date of publication of application:
**27.09.89 Bulletin 89/39**

(84) Designated Contracting States:
**DE FR IT**

(71) Applicant: **ASSOCIATED ELECTRICAL INDUSTRIES LIMITED**
**1 Stanhope Gate**
**London W1A 1EH(GB)**

(72) Inventor: **Gill, Dennis c/o AEI Cables Limited**
**Mineral Insulated Cables Division Hawthorne Road**
**Bootle Merseyside L20 9PN(GB)**
Inventor: **Rimmer, George Louis**
**80 Vernon Road**
**Pynton Cheshire SK12 1YR(GB)**

(74) Representative: **Maury, Richard Philip**
**The General Electric Company p.l.c. G.E.C.**
**Patent Department (Wembley Office) Hirst**
**Research Centre East Lane**
**Wembley Middlesex HA9 7PP(GB)**

(54) End seal for electric cable.

(57) An end seal for a sheathed electric cable (4) comprising a seal body having a skirt portion (1) with an opening (19) at one end designed to fit over the end of a cable, and closed at the opposite end apart from one or more openings (5) for the passage of the conductor or conductors (3) of the cable, wherein the skirt portion is provided with a sealant (7) which, in use, serves to seal the skirt portion to the cable sheath (6) and to the conductor or conductors, to provide a moisture proof barrier.

Fig.1.

## End Seal for Electric Cable

This invention relates to end seals for electric cables, more especially for cables of the kind comprising one or more electric conductors enclosed within a metal sheath and insulated from the sheath, and also from each other if there are more than one, by powdered insulating material, commonly magnesia.

One form of end seal for such cables which is in common use at the present time comprises a hollow cylindrical metal collar one end of which is arranged to be screwed on to the end of the metal sheath, the conducting element or elements projecting from the opposite end of the collar the interior of which is sealed by the introduction therein of a hardenable electrically insulating filler material, such as a thermosetting resin. In some cases the outer end of the collar is fitted with an electrically insulating insert, for example of rubber or a rubber-like plastics material, which effectively closes that end of the collar. The insert is provided with one or more openings for the passage of the conducting element or elements, each said opening commonly being surrounded at its outer end with an outwardly-projecting hollow stub through which the respective conducting element extends.

An object of the invention is to provide a form of seal which has advantages over the conventional forms of seal described above.

According to the invention an end seal for a sheathed electric cable comprises a seal body having a skirt portion with an opening at one end designed to fit over the end of a cable, and closed at the opposite end apart from one or more openings for the passage of the conductor or conductors of the cable, wherein the skirt portion is provided with a sealant which, in use, serves to seal the skirt portion to the cable sheath and to the conductor or conductors, to provide a moisture proof barrier.

The sealant may be a coating comprising a bonding medium for bonding the seal body to the sheath and to the conductor or conductors. The bonding medium employed must, of course, be compatible with the materials of the seal body and of the cable so as to adhere thereto in its cured condition, and where the seal body and/or the cable sheath is/are of elastic material the bonding medium is preferably an elastomer.

The seal body may, for example, be formed in one piece from a suitable insulating material, for example silicone rubber or high density polypropylene. These materials can readily be moulded into shape. Any convenient bonding medium or mechanical bonding mechanism may be incorporated or attached to the seal body.

In the case where the seal body is of silicone rubber the bonding medium may, for example, consist of a room temperature curable silicone rubber and where the seal body is formed of polypropylene the bonding medium may be abactic polypropylene or polyisobutylene.

Conveniently, the seal body has associated with it a mechanical retaining device which is shaped to grip the seal body and the cable sheath, when the seal body is fitted over the end of the cable, to assist in securing the seal body firmly to the cable.

The retaining device may, for example be in the form of a retaining washer with a base shaped to engage the surface of the sheath, and provided with an extension which fits around the seal body. The extension preferably carries inward projections disposed and shaped to permit the seal body readily to be inserted into the extension, but such as to resist its removal therefrom. Such projections, which are conveniently spaced around the edge of the extension, are preferably in the form of inwardly inclined triangular claws extending towards the base of the washer. The washer may be formed of stainless spring steel, or a copper beryllium alloy, although other materials having the required properties could alternatively be employed.

The dimensions of the skirt portion and the number and dimensions of the opening(s) for the conductor(s) of the cable will, of course, depend upon the particular cable with which the seal is to be used, but can readily be chosen to suit different forms of cable construction.

Preferably the bonding medium is curable at ambient or relatively low temperatures, thereby avoiding any appreciable heating of the seal after fitting, as is required with the heat-shrink types of cable seal.

However the materials of the seal body and of the bonding medium may readily be varied to accommodate different conditions of use, for example for both high temperature and cryogenic applications.

Thus in some cases the coating may incorporate, in addition to the bonding medium, a separate activator for curing the medium, the activator being contained within rupturable microcapsules at least some of which are arranged to be ruptured to release the activator on insertion of the cable into the skirt portion, whereby diffusion of the activator into the bonding medium effects the curing of the latter, so as to effect the bonding of the seal body to the sheath and the conductor or conductors.

The use of such a composite coating incorporating the bonding medium and activator has the advantage that it enables the coating to be applied during manufacture of the seal, and the application of a separate adhesive immediately prior to fitting on to a cable end is also avoided. It thus reduces considerably the time taken to form a satisfactory sealing of a cable end, and is of particular advantage for use with mineral insulated cables.

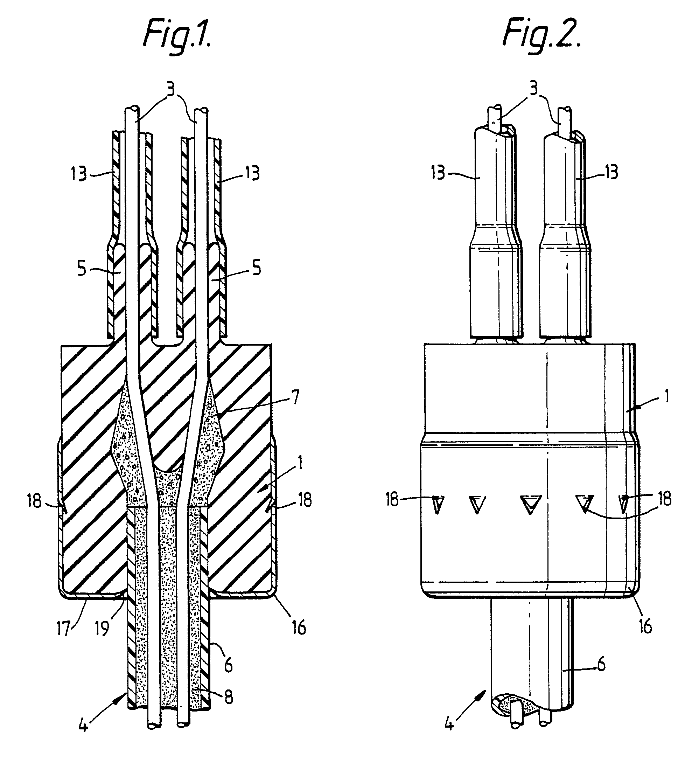

One seal in accordance with the invention will now be described by way of example with reference to Figures 1 and 2 of the accompanying schematic drawing, in which :

Figure 1 represents an axial section and

Figure 2 a side elevation of the seal fitted to a mineral insulated electric cable.

Referring first to Figure 1 the seal comprises a moulding 1 of silicone rubber having a hollow cylindrical skirt portion, open at one end and closed at the other except for openings for the passage of the conductors 3 of the cable 4 on to which the seal is fitted. The illustrated moulding has two such openings, but it will be appreciated that the number will depend upon the number of conductors in the cable on which the seal is designed to be used.

The openings are surrounded externally by flexible tubular longitudinally-extending projections 5 designed to fit closely around the conductors 3 of the cable, and in the seal illustrated these carry flexible insulating sleeves 13.

The inner surface of the moulding 1 has applied to it a bonding medium 7 which serves to secure the moulding to the end of the cable and also forms a moisture proof barrier which prevents the ingress of moisture into the powdered insulating material, usually magnesium oxide which surrounds the conductors 3, the bonding medium conveniently being a room temperature curable silicone resin.

The moulding 1 carries, in addition, a retaining member 16 in the form of a cylinder closed at one end 17 apart from a central aperture for the passage of the end of the cable sheath 6. The skirt portion of the moulding 1 fits into the open end of the retaining member, the wall of the latter being formed with a series of inwardly pressed rearwardly extending triangular claws 18 which permit the moulding to be readily inserted into the open end of the member, but dig into the side of the moulding and retain it against withdrawal.

In addition the wall of the base 17 of the retaining member surrounding the central opening is chamfered to a knife-edge as at 19, and is dimensioned such that, as the end of the cable is inserted into the skirt of the moulding 1, it is deformed slightly and bites into the wall of the cable sheath 6 thereby securing the cable against withdrawal from the moulding. The member 16 thus serves to mechanically secure the moulding to the cable, and assists in providing a rigid seal.

Other shapes of retaining member which act in the same manner as that described, to secure the moulding to the cable sheath 6, could, however, be used in place of the one described.

It will also be appreciated that the invention is not restricted to use with seals having a seal body of the form described, but could be employed with seals having other shapes, with or without a mechanical retaining member for use on mineral insulated or other types of cable.

In a modification, the inner surface of the moulding 1 has applied to it a composite coating consisting of a mixture of a curable synthetic resin elastomer together with a suitable activator therefor. The latter is conveniently contained within rupturable microcapsules which are arranged to fracture on insertion of the cable end into the moulding releasing the activator into the resin, the activator then dispersing through the resin, causing a chemical reaction to take place. This thereby effects the curing of the resin and produces a permanent, moisture impervious bond between the moulding on the one hand and the metal sheath and conductors on the other hand.

## Claims

1. An end seal for a sheathed electric cable (4) comprising a seal body having a skirt portion (1) with an opening (19) at one end designed to fit over the end of a cable, and closed at the opposite end apart from one or more openings (5) for the passage of the conductor or conductors (3) of the cable, wherein the skirt portion is provided with a sealant (7) which, in use, serves to seal the skirt portion to the cable sheath (6) and to the conductor or conductors, to provide a moisture proof barrier.

2. An end seal according to Claim 1, in which the seal body is formed in one piece from a suitable insulating material.

3. An end seal according to Claim 1 or 2, in which the sealant is a coating comprising a bonding medium for bonding the seal body to the sheath and to the conductor or conductors.

4. An end seal according to Claim 3, in which the bonding medium is curable at ambient or relatively low temperatures.

5. An end seal according to Claim 4, in which the seal body is of silicone rubber and the bonding medium is of room temperature curable silicone rubber.

6. An end seal according to any preceding claim, in which the seal body has associated with it a mechanical retaining device which is shaped to grip the seal body and the cable sheath, when the seal body is fitted over the end of the cable, to assist in securing the seal body firmly to the cable.

7. An end seal according to Claim 6, in which the retaining device is in the form of a retaining washer with a base shaped to engage the surface of the sheath, and provided with an extension which fits around the seal body.

8. An end seal according to Claim 7, in which the extension carries inward projections disposed and shaped to permit the seal body readily to be inserted into the extension, but such as to resist its removal therefrom.

9. An end seal according to Claim 3, 4 or 5, in which the coating comprises, in addition to the bonding medium, a separate activator for curing the medium, the activator being contained within rupturable microcapsules at least some of which are arranged to be ruptured to release the activator on insertion of the cable into the skirt portion, whereby diffusion of the activator into the bonding medium effects the curing of the latter, so as to effect the bonding of the seal body to the sheath and the conductor or conductors.

Fig.1.

Fig.2.